# DEMANDE DE BREVET EUROPEEN

(11) **EP 1 967 570 A1**
(43) Date de publication de la demande: **10.09.2008**
(21) Numéro de dépôt: 07468009.1
(22) Date de dépôt: 23.07.2007
(51) Int. Cl.: C10L 5/44

(54) **Cartouche de biomasse pour l'obtention d'énergie thermique**

(30) Priorité: 09.03.2007 SI 200700051
(71) Demandeur: Kostelec, Antonio Agustin, 08330 Metlika (SI)
(72) Inventeur: Kostelec, Antonio Agustin, 08330 Metlika (SI)

(57) **Abrégé**

La cartouche de biomasse pour l'obtention d'énergie thermique est un corps, dont l'enveloppe est fermée de tous ses côtés, fabriquée en papier ou en carton, en carton ondulé, en plaque de bois mince ou en d'autres matériaux combustibles n'ayant pas d'impact négatif sur l'environnement, et assemblée comme un emballage.

Les dimensions de la cartouche de biomasse sont adaptées à son alimentation manuelle dans les fours standard à bois et elles sont comprises entre 15 cm et 50 cm de longueur et entre 5 cm et 20 cm de diamètre ou de largeur.

Son enveloppe contient un ou plusieurs types de mais ou des granulés de bois (pellets), des bois déchiquetés, d'écorce, des céréales, de l'avoine, du blé, de l'orge, d'autres grains agricoles, de la sciure, des copeau, des noyaux d'olive, ou de pêche, ou de noisettes, ou d'autres noyaux fruitiers, des coquilles de noix, de noisettes, d'autres coquilles fruitiers ou une mélange de plusieurs types de biomasse mentionnés.

Elle est destinée à l'utilisation de la biomasse comme source d'énergie thermique dans différents types de fours à bois comme les chaudières domestiques, les cheminés, les poêles et les cuisinières, dans lesquels jusqu'à présent il n'est pas possible l'utilisation de la biomasse, et cela, sans besoin d'aucun accessoire supplémentaire ni d'aucune modification des types de fours mentionnés.

## Description

La cartouche de biomasse pour l'obtention d'énergie thermique est un corps de forme cylindrique ou prismatique, ayant entre 15 cm et 50 cm de longueur et de 5 cm à 20 cm de diamètre ou largeur.

Sa partie extérieure, c'est-à-dire, son enveloppe formant une chambre remplie de biomasse, dans le reste du texte: l'enveloppe, est fermée de tous ses côtés, fabriquée en papier ou en carton, en carton ondulé, en plaque de bois mince ou en d'autres matériaux combustibles n'ayant pas d'impact négatif sur l'environnement, et assemblée comme un emballage.

L'enveloppe contient un ou plusieurs types de mais ou des granulés de bois (pellets), des bois déchiquetés, d'écorce, des céréales, de l'avoine, du blé, de l'orge, d'autres grains agricoles, de la sciure, des copeau, des noyaux d'olive, ou de pêche, ou de noisettes, ou d'autres noyaux fruitiers, des coquilles de noix, de noisettes, d'autres coquilles fruitiers ou une mélange de plusieurs types de biomasse mentionnés.

La cartouche de biomasse pour l'obtention d'énergie thermique est une charge de biomasse, destinée à la combustion dans des fours standards à combustibles solides et plus particulièrement, dans les chaudières domestiques à bois, les cheminés, les poêles et les cuisinières à bois, dans lesquelles il est possible de l'utiliser de la même façon que le bois.

Sa vitesse de combustion dépend de la composition de son contenu de biomasse et de la régulation d'entrée d'air dans le four.

Son utilisation n'exige pas d'accessoires additionnels, lesquels existent habituellement dans les chaudières spéciales à biomasse (par exemple, le réservoir de biomasse, le doseur, le brûleur de biomasse, l'équipement électronique de contrôle et réglage, etc.). Les accessoires mentionnés ne sont pas nécessaires car le produit décrit est une charge unitaire de biomasse, laquelle s'introduit manuellement dans la chambre de combustion, comme le bois.

Le procède de fabrication de la cartouche de biomasse pour l'obtention d'énergie thermique est semblable à celui du remplissage de matériaux granulés dans son emballage. Donc, les enveloppes vides sont déposées dans une ligne de production automatique étant ouvertes dans son extrême supérieur, la chaîne de la ligne les transporte jusqu'à la station de remplissage, ou le chargeur automatique les rempli jusqu'à sa capacité maximale avec la biomasse mentionnée ci-dessus. Dans la station suivante se fait la fermeture et l'identification des cartouches remplies en imprimant sur leurs enveloppes les données de production nécessaires à la traçabilité de la fabrication. Puis, les cartouches de biomasse sont déposées dans des cartons d'emballage pour leur vente, lesquels sont en suite rangés sur une palette pour leur transport et livraison au commerce. Les cartons mentionnés servent aussi au consommateur pour approcher les cartouches au four, auquel il va les introduire l'une après l'autre, selon besoin.

En dépit de l'importance de la biomasse comme source d'énergie thermique renouvelable, tant dans le domaine de l'écologie que dans celui de l'économie, permettant d'augmenter l'indépendance énergétique de la Slovénie et de l'Europe, ainsi que d'optimiser l'exploitation des forêts, de réduire les coûts énergétiques et la contamination environnemental, liée à l'utilisation de fuel-oil domestique, l'expansion de l'utilisation de la biomasse comme source d'énergie thermique a une forte contrainte dans le fait que pour son utilisation dans les foyers, il est nécessaire l'installation d'un four spécial, avec un brûleur spécifique et d'accessoires adaptés pour le stockage et le dosage de la biomasse au brûleur.

De plus, comme le prix du bois, qui augmente parallèlement au prix du pétrole, est plus élevé que celui d'une quantité thermiquement équivalente de biomasse, l'utilisation de la biomasse à la place du bois permet aussi de réduire les coûts d'utilisation des chaudières et fours standards à bois.

Dans le domaine de l'obtention de l'énergie thermique en partant des sources renouvelables, comme la biomasse, le niveau d'investissement nécessaire pour l'installation d'une chaudière spécifique à biomasse, en règle générale, pour les particuliers représente des montants trop élevés, même avec les subventions de l'état, ce qui empêche l'augmentation du nombre de foyers utilisateurs de biomasse. Par conséquent, la production de biomasse et le nombre de fournisseurs restent limités par la faible consommation et le prix de la biomasse est adapté à son faible volume de ventes.

En même temps, jusqu'à présent, il n'existe aucune solution technique pour l'utilisation de la biomasse dans les chaudières et poêles à bois, les cheminés et les cuisinières à bois.

La cartouche de biomasse pour l'obtention d'énergie thermique est une invention se rapportant au domaine de l'utilisation de la biomasse dans les foyers.

Dans l'état actuel de la technique, pour l'utilisation de la biomasse dans les chaudières destinées au chauffages des maisons, il est nécessaire une chaudière spéciale dotée d'un équipement adapté, lequel permet le stockage de biomasse, son transport automatique du lieu de stockage jusqu'à la chaudière et le dosage de la biomasse, selon besoin, dans le brûleur.

Par contre, pour l'utilisation de la biomasse dans les chaudières à bois, ainsi que dans les poêles, les cheminés et les cuisinières à bois, il n'existe aucune solution technique, par conséquent, à présent, il n'est pas possible l'utilisation de la biomasse dans ces types de fours.

Le produit étant l'objet de cette invention permet, par contre, l'utilisation de la biomasse dans toutes les chaudières à bois, ainsi que dans les poêles, les cheminés et cuisinières à bois, sans besoin d'accessoires supplémentaires et sans nécessité de modifier le four existant, car il peut être utilisé de la même manière que le bois, c'est-à-dire, avec une alimentation manuelle du four.

La différence entre les bûches et l'invention décrite se trouve dans le fait que les bûches ne sont constituées que de petites plaquettes ou grains de bois déchiqueté, étant mélangés avec de la colle, pressés, modelés et séchés. Par contre, la cartouche de biomasse n'a pas besoin de colle dans son contenu ni de machines spéciales pour sa fabrication, en dehors du système de remplissage.

L'utilisation des cartouches de biomasse pour l'obtention d'énergie thermique va provoquer un développement supplémentaire du marché de la biomasse grâce au prix plus bas de ce combustible et à son utilisation plus agréable que celle du bois, lequel salit la maison, n'a pas toujours le contenu optimal d'humidité pour assurer un rendement thermique maximale constant ni des dimensions régulières, alors que les cartouches de biomasse assurent une propreté totale et une utilisation agréable, car ses dimensions sont compatibles avec chaque type de four domestique.

## Revendications

1. La cartouche de biomasse pour l'obtention d'énergie thermique, **caractérisée en ce qu'**elle est un corps de forme cylindrique ou prismatique, dont les dimensions vont de 15 cm à 50 cm de longueur et de 5 cm à 20 cm de diamètre ou largeur.

2. La cartouche de biomasse pour l'obtention d'énergie thermique, selon la revendication 1, **caractérisée en ce que** son enveloppe est fermée de tous ses côtés, fabriquée en papier ou en carton, en carton ondulé, en plaque de bois mince ou en d'autres matériaux combustibles n'ayant pas d'impact négatif sur l'environnement, et assemblée comme un emballage.

3. La cartouche de biomasse pour l'obtention d'énergie thermique, selon la revendication 1, **caractérisée en ce que** son enveloppe contient un ou plusieurs types de mais ou des granulés de bois (pellets), des bois déchiquetés, d'écorce, des céréales, de l'avoine, du blé, de l'orge, d'autres grains agricoles, de la sciure, des copeau, des noyaux d'olive, ou de pêche, ou de noisettes, ou d'autres noyaux fruitiers, des coquilles de noix, de noisettes, d'autres coquilles fruitiers ou une mélange de plusieurs types de biomasse mentionnés.
